Europäisches Patentamt

(19) European Patent Office

Office européen des brevets

(11) Publication number: **0 228 100**
**B1**

## (12) EUROPEAN PATENT SPECIFICATION

(45) Date of publication of patent specification: **18.07.90**

(51) Int. Cl.⁵: **A 01 J 7/00, G 01 G 17/06**

(21) Application number: **86201798.5**

(22) Date of filing: **16.10.86**

(54) Milkmeter for determining the weight of the quantity of milk issued by a cow during milking.

(30) Priority: **28.10.85 NL 8502938**

(43) Date of publication of application:
**08.07.87 Bulletin 87/28**

(45) Publication of the grant of the patent:
**18.07.90 Bulletin 90/29**

(84) Designated Contracting States:
**DE FR GB IT NL**

(56) References cited:
**EP-A-0 052 396**
**WO-A-82/03965**
**DE-A-1 123 122**
**DE-A-2 747 111**
**FR-A-2 334 945**

(73) Proprietor: **Kummer Electronics B.V.**
**Oostergrachtswal 91-95**
**NL-8921 AB Leeuwarden (NL)**

(72) Inventor: **Kummer, Jan**
**Oostergrachtswal 91 - 95**
**NL-8921 AB Leeuwarden (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

Courier Press, Leamington Spa, England.

# EP 0 228 100 B1

**Description**

The invention relates to a milkmeter for determining the weight of the quantity of milk issued by a cow during milking, comprising a measuring container, a supply valve for supplying the milk to the measuring container and a discharge valve for discharging the milk from the container after the measurement and a vertically movable guided elongated float in the container, the upper end of which cooperates with a proximity switch mounted stationary over this upper end on the container, said switch opening the discharge valve and, with some delay opens the supply valve for a new measurement of the float has risen through a height corresponding to a constant milk weight in the container and thereby actuates the switch.

A similar milkmeter is known from the EP-patent application 0052396. Therein the float has a prismatic form, particularly a cylindrical form, as well as the container, and the float is vertically movably guided.

The invention aims at improving said milkmeter. This is achieved according to the invention in that

a) the measuring container and the float both are substantially shaped as a truncated cone having a vertical axis and the largest diameter at the upper end, wherein the ratio of the smallest diameters mutually of said truncated cones is equal to the ratio of the largest diameters thereof mutually,

b) the float guiding means exclusively comprise a stationary guide ring situated at the upper end of the float in the container axis and engaging around a pin-shaped portion extending coaxially from the upper end of the float, a disc being provided at the upper end of the pin-shaped portion and cooperating with the proximity switch, the float being supported in its inoperative condition by said disc on the guide ring.

The said diameter ratio guarantees that with each milk level in the container the contents of the immersed float portion is a constant fraction of the milk contents of the container. This will be explained below.

By the cone shape of the float and the fact that due to this shape the centre of gravity of the float is at a higher level than with a prismatic float, said float will float more stable on the milk, i.e. there is less tendency that the float axis deviates from the vertical under the influence of the movement of the milk due to the flowing thereof into the container. Thereby only an upper guide means for the float will suffice because the float will quickly regain its vertical position in these guide means when fluctuations occur, so that no switching errors will occur. Also due to this fact the meter is for its accurate operation no longer dependent on accurate level position of the container.

Due to the omission of the lower guide means the cone shaped float is less exposed to friction in its vertical movements than the known prismatic float so that the reaction is shorter and the measurement becomes more accurate.

It is to be noted that DE—A—2747111 shows a device for measuring and delivering portions of liquid with a constant weight, in which the float likewise is made more stable by decreasing the floating power of the lower float end, so that only one float guiding means at the upper float end suffices.

Due to the cone shape of the float and the measuring container the quantity of milk, which is present in the switching position below the level of the lower float end (and which represents a not constant weight, see the computation in the above mentioned patent application) is smaller than with the known meter, so that also thereby the measurement becomes more accurate.

For it is that the diameter of the lower float end is smaller.

For measuring the total milk weight issued by a cow when measurement takes place the container must have a contents smaller than the milk quantity which minimally may be expected, in order to permit electronic measurement through the switch. After the measurement has taken place first the container has to be drained before the next quantity may be supplied. It is preferable to make the container volume as large as possible since then the error due to the non constant weight below the float as a percentage of the total milk weight likewise becomes smaller. This requires a larger buffer space into which the milk of the cow flows while the container is draining. With the known meter this is avoided by using two parallely acting containers in one meter, each having its own float.

According to the invention it is possible due to the small volume below the float to have a larger container volume without increase of inaccuracy so that a container having a single float is possible, wherein the meter has a central lower discharge opening to which, moreover, milk is automatically guided by the cone shape so that low discharge friction occurs. The discharge thereby takes less time (less buffering space necessary).

The float and the measuring container of the known meter cannot be manufactured by injection molding in accurately cylindrical shape since in that case they are not self removing and the die used therein would be more complicated and more expensive in order to permit removal. Moreover, if the shape is not accurately cylindrical this also causes an inaccuracy. This disadvantage is eliminated with the cone shape according to the invention.

It is advantageous for quick draining of the measuring container after each measurement if the truncated cone shaped mesuring container is at its lower end coaxially connected to a discharge conduit which may be opened and closed respectively through a pneumatically or electromagnetically actuatable valve.

Preferably the discharge conduit is a resilient hose and the valve is a pinching valve, symmetrically closing the hose and operating in the direction transverse to the hose axis.

Preferably the proximity switch is a linear switch which carries out linear measurement of the further

2

upwardly floating stroke due to milk flowing into the container after the float has operated the switch, so that also this last quantity is registered.

It is preferable if the measuring container has a T-piece provided at the milk inflow opening, whereby the milk is tangentially supplied in two opposite directions simultaneously. With tangential flow due to the cone shape of the measuring container the centrifugal force on the milk increases in downward direction whereby the air may easier leave the milk. Although the presence of air has only a negligible influence on the measurement of the weight the air causes foaming, which in extreme condition could cause adhesion of the float to the container wall, to the guide means or to the switch and thereby a measuring error.

The two-sided supply serves for avoiding swirling of the milk when flowing into the container, particularly in connection with the cone shape, whereby the milk level will be irregular and again a measuring error would occur. Also the two-sided supply causes less damage to the milk.

Due to the cone shape the milk, during the last part of the discharge from the container, has a larger free upper surface than with a cylindrical container so that also thereby better deaeration is obtained.

Instead of cone-shaped the float and the measuring container could also be in the shape of truncated pyramids having similar cross-sections.

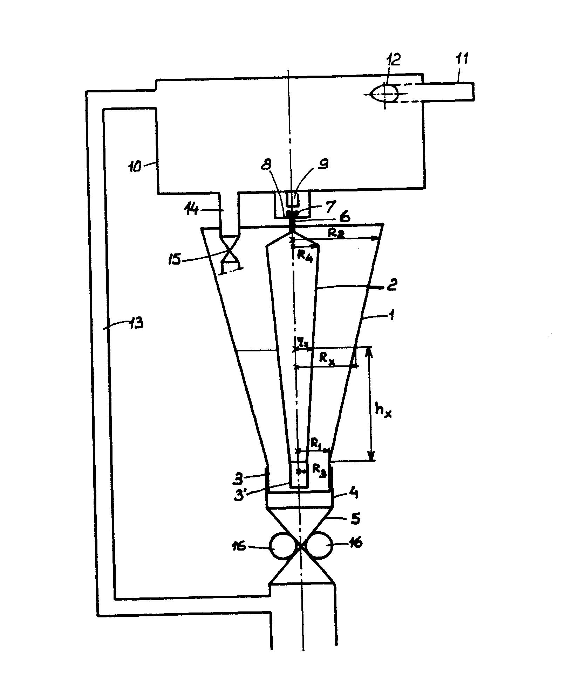

The invention will be further explained below with reference to the drawing showing a schematic embodiment given as an example of the milkmeter according to the invention.

The meter has a measuring container 1 shaped as a truncated cone.

The radius of the lower delimitation circle of the truncated cone is indicated R1, that of the upper circle R2. Coaxially with the container 1 a float 2 with truncated cone shape has been provided within the container, the radius of the lower delimitation circle of the float being indicated R3 and that of the upper delimitation circle of the truncated part R4.

The measuring container 1 is extended at its lower end by a cylindrical portion 3 having equal diameter as the lower delimitation circle. A conduit, e.g. a hose 4, is connected with said lower end for discharging the milk, said hose being adapted to be closed and opened by a valve 5, schematically shown. The float end is extended with a cylindrical portion 3', which correspond to the cylinder-shaped discharge portion of the measuring container. In this manner the milk volume below the float is reduced to a minimum.

The upper end of the float 2 is extended via a tapered portion by a pin shaped portion 6, carrying at its upper end a disc 7. The float is supported through this disc 7 in the inoperative position as shown on a guide ring 8, which is secured to a portion of the meter above the measuring container and said disc, apart from for supporting the float, also serves for guiding the float in its vertical movements under the influence of the upward force imparted to the float by milk supply to the container. Coaxial with and over the disc 7 a so-called proximity switch 9 is provided, e.g. a Hall-switch.

In the embodiment shown the guide ring 8 and the switch 9 are secured to the bottom of a buffering container 10 to which milk may be supplied through a connecting sprout 11 and a supply conduit (not shown) connected therewith, via an opening 12 at the end of the sprout 11. Preferably said sprout is provided tangentially with respect to the buffering reservoir 10 to permit release by the milk of any air present therein, as much as possible, in that the milk initially enters the container 10 along its wall. A connecting conduit 13 is provided between the buffering space 10 and the continuation of the hose 4 beyond the valve 5. Thereby pressure equalization takes place between the buffering space 10 and the hose 4 and thereby in the measuring container in the vertical direction, so that the measurement is executed exclusively under the influence of gravity and is not influenced by possible pressure differences.

The buffering container 10 has a discharge sprout 14 having a discharge valve at its lower end. The valves 5 and 15 are actuated through the switch 9 by means of electronic control means (not shown).

The meter operates as follows:

If the valve 15 is opened, milk, which was present in the container 10, flows into the measuring container 1 and ascends therein, since simultaneously the valve 5 has been closed. At the moment in which the level of the milk in the container 1 is such that the portion of the float 2, immersed in said milk, has a volume equal to that of a quantity of milk, the weight of which is equal to the weight of the float, the float experiences an upward force, whereby the float is moved upwardly. In that the disc 7 thereby moves nearer to the switch 9, said switch switches, i.e. issues a signal whereby the valve 15 is closed and simultaneously the valve 5 is opened. The milk present in the container 1 may then drain to a receiving container (not shown).

If now with each milk level the immersed portion of the float has a volume which is a constant fraction of the volume of the container portion filled with milk, the container contains a constant weight of milk, which is registered as such by a counter (not shown).

As described in the above mentioned patent application EP—A—0052396 the weight present in the container each time when the switch switches is independent of the specific weight of the milk, i.e. of the quantity of air present in the milk. The level container 1 will, at the switching moment, be higher with a smaller specific weight of the milk than with a larger specific weight, but the weight of the milk in the container is equal each time the switch is operated.

It will now be shown that the ratio between the contents of the measuring container and the volume of the immersed portion of the float is at each milk level equal if the mutual ratio of the smallest diameters of the truncated cones is equal to that of the largest diameters thereof, or if R1:R3=R2:R4.

For it is that this ratio is present if the apexes of the cones from which the said truncated cones have been derived coincide. Then that ratio also applies at an arbitrary height, therefore with each milk level h. If one assumes (see the figure) that the float radius at the level $h=r_x$ and that of the continer Rx, then the following equation applies:

The contents of the measuring container at the height $h=1/3\pi h$ $(R1^2+Rx^2+R1Rx)$ and that of the float at this level $=1/3\pi h(R_3^2+r_x^2+R_3r_x)$.

If one indicates R1:R3 by $\sqrt{x}$ then

$$\frac{R_1^2}{R_3^2} = \frac{R_x^2}{r_x^2} \cdot \frac{R_x}{r_x} = x$$

so that the container contents always is a factor x times the float contents.

As said preferably the supply valve 14 has a T-shaped discharge piece (not shown) whereby the milk may be applied simultaneously tangentially in two opposite directions.

Further preferably the valve 5 is a symmetrically closing pinching valve acting transverse to the hose axis wherein, for closing the valve, two cylindrical valve closure means 16, schematically indicated in the figure, are moved towards each other.

Said switch 9 may be a linear Hall-switch which switches as soon as the milk level corresponds to the required weight.

Prior to the closing of the supply valve 15 by the switching signal, some milk will flow in whereby the float further rises. The lineary rising distance of the disc 7 is in that case also registered by the switch.

In the buffering container 10 always a quantity of milk is present when the supply valve 15 is opened, so that a practically constant supply velocity through the valve 15 is guaranteed.

## Claims

1. Milkmeter for determining the weight of the quantity of milk issued by a cow during milking, comprising a measuring container (1), a supply valve (15) for supplying the milk to the measuring container (1) and a discharge valve (5) for discharging the milk from the measuring container after the measurement, and a vertically movable guided elongated float (2) in the container, the upper end of the float cooperating with a proximity switch (9) stationary mounted over the upper end of the float to the container, said switch opening the discharge valve and, with a certain delay, opens the supply valve for a new measurement, if the float has risen to a height corresponding to a constant weight of milk in the container and thereby actuates the switch, characterized in that

a) the measuring container (1) and the float (2) both are substantially shaped as a truncated cone having a vertical axis and the largest diameter at the upper end, wherein the ratio of the smallest diameters mutually (R1:R3) of said truncated cones is equal to the ratio of the largest diameters thereof mutually (R2:R4),

b) the float guiding means exclusively comprise a stationary guide ring (8) situated at the upper end of the float (2) in the container axis and engaging around a pin-shaped portion (6) extending coaxially from the upper end of the float, a disc (7) being provided at the upper end of the pin-shaped portion (6) and cooperating with the proximity switch (9), the float (2) being supported in its inoperative condition by said disc (7) on the guide ring (8).

2. Milkmeter according to claim 1, characterized in that the truncated cone shaped measuring container (1) is at its lower end (3) coaxially connected to a discharge conduit (4) which may be opened and closed respectively through a pneumatically or magnetically actuatable valve (5).

3. Milkmeter according to claim 2, characterized in that the discharge conduit is a resilient hose (4) and the valve (5) is a pinch valve (5, 16) symmetrically closing and acting transverse to the hose axis.

4. Milkmeter according to claim 1, characterized in that the proximity switch (9) is a linear switch which after having been actuated by the floating float (2) linearly measures the further rising distance which occurs due to milk flowing in after the switching moment and thereby also registers said last-mentioned quantity.

5. Milkmeter according to one or more of the preceding claims characterized in that the measuring container (1) has a T-piece at the milkflow aperture, whereby the milk tangentially is supplied simultaneously in two opposite directions.

## Patentansprüche

1. Milchmengenmesser zum Bestimmen des Gewichtes der während des Melkens von einer Kuh abgegebene Milchmenge, versehen mit einem Messbehälter (1), einem Zufuhrventil (15) zum dem Messbehälter (1) Zuführen der Milch und mit einem Ablassventil (5) zum nach der Messung aus dem Messbehälter ablassen der Milch, sowie mit einem vertikal bewegbar geführten länglichen Schwimmer (2) im Behälter, von welchem Schwimmer das oberen Ende mit einem Annäherungsschalter (9) zusammenarbeitet, welcher ortsfest oberhalb des oberen Endes des Schwimmers am Behälter angeordnet ist, welcher Schalter das Ablassventil öffnet und mit einer gewissen Zeitverzögerung das Zufuhrventil für

EP 0 228 100 B1

eine neue Messung öffnet wenn der Schwimmer zu einer Höhe gestiegen ist, welche einem konstanten Milchgewicht im Behälter entspricht und dadurch den Schalter bedient, dadurch gekennzeichnet, dass

a) der Messbehälter (1) und der Schwimmer (2) beide haupsächlich die Form eines Kegelstumpfs mit vertikaler Achse und mit dem grössten Durchmesser am oberen Ende aufweisen, während das Verhältnis unter einander der kleinsten Durchmesser (R1:R3) der Kegelstumpfe dem Verhältnis dessen grössten Durchmesser unter einander (R2:R4) entspricht,

b) die Mittel zum Führen des Schwimmers ausschliesslich bestehen aus einem ortsfesten Führungsring (8) welcher am oberen Ende des Schwimmers (2) in der Behälterachse liegt und um einen stiftförmigen Teil (6), welcher koachsial vom oberen Ende des Schwimmers hervorragt, herum greift, während eine Scheibe (7) am oberen Ende des stiftförmigen Teils (6) vorgesehen ist und mit dem Annäherungsschalter (9) zusammenarbeitet, und der Schwimmer (2) in seinem unwirksamen Zustand von dieser Scheibe (7) am Führungsring (8) unterstützt wird.

2. Milchmengenmesser nach Anspruch 1, dadurch gekennzeichnet, dass der kegelstumpfförmige Messbehälter (1) an seinem unteren Ende (3) koachsial mit einer Ablassleitung (4) verbunden ist, welche Leitung mittels eines pneumatisch oder magnetisch bedienbaren Ventils (5) geöffnet bezw. geschlossen werden kann.

3. Milchmengenmesser nach Anspruch 2, dadurch gekennzeichnet, dass die Ablassleitung ein elastischer Schlauch (4) ist und das Ventil (5) ein Klemmventil (5, 16) ist, welches symmetrisch schliesst und quer zur Schlauchachse arbeitet.

4. Milchmengenmesser nach Anspruch 1, dadurch gekennzeichnet, dass der Annäherungsschalter (9) ein linearer Schalter ist, welcher, nachdem er vom schwimmenden Schwimmer (2) bedient worden ist, linear den weiteren Steigungsabstand misst, welcher dadurch zurückgelegt wird, dass Milch nach dem Schaltmoment einfliesst, und der Schalter deshalb auch diese letztgenannte Menge registriert.

5. Milchmengenmesser nach einem oder mehreren der vorangehenden Ansprüche, dadurch gekennzeichnet, dass der Messbehälter (1) ein T-Stück in der Milchzuführungsöffnung aufweist, so dass die Milch tangential zugleicherzeit in zwei entgegengesetzten Richtungen zugeführt wird.

**Revendications**

1. Appareil pour mesurer le poids du lait tiré d'une vache pendant la traîte, comprenant un réservoir (1) de mesure, une soupape (15) d'admission à admettre le lait au réservoir (1) de mesure et une soupape (5) de décharge à décharger le lait du réservoir de mésure après la mesure, ainsi qu'un flotteur (2) allongé verticalement mobile, l'extrémité supérieure du flotteur coopérant avec un commutateur (9) de proximité étant fixé au réservoir au dessus de l'extrémité supérieure du flotteur, ledit commutateur ouvrant la soupape de décharge et, avec un certain délai, la soupape d'admission pour un mesurage nouveau, si le flotteur a été élevé au une hauteur correspondant à un poids de lait constant dans le réservoir et part conséquent actionne le commutateur, caractérisé en ce que

a) le réservoir (1) de mésure, ainsi que le flotteur (2), ont essentiellement une forme de cône tronqué à axe vertical et avec le diamètre plus grand à l'extrémité supérieure, dans lequel le rapport mutuel des diamètres les plus petits (R1:R3) de ses cônes tronqués est équivalent au rapport mutuel de leurs diamètres les plus grands,

b) les moyens de guidage du flotteur comprennent exclusivement un anneau (8) fixe de guidage situé à l'extrémité supérieure du flotteur (2) dans l'axe du réservoir et s'engageant autour d'une partie (6) en forme de broche projetant coaxialement de l'extrémité supérieure du flotteur, un disque (7) étant prévu à l'extrémité supérieure de la partie (6) en forme de broche et coopérant avec le commutateur (9) de proximité, le flotteur (2) étant supporté dans sa condition inopérative par ledit disque (7) sur l'anneau (8) de guidage.

2. Appareil selon la revendication 1, caractérisé en ce que le réservoir (1) de mesure en forme de cône tronqué est relié à son extrémité inférieure (3) coaxialement à un conduit (4) de décharge, étant adapté d'être ouvert et fermé respectivement au moyen d'une soupape (5) actionable de façon pneumatique ou magnétique.

3. Appareil selon la revendication 2, caractérisé en ce que le conduit de décharge est une manche (4) élastique et que la soupape (5) est une soupape (5, 16) de pinçage fermant de façon symmetrique et actionnant transversalement à l'axe de la manche.

4. Appareil selon la revendication 1, caractérisé en ce que le commutateur (9) de proximité est un commutateur linéaire mesurant, après avoir été actionné par le flotteur (2) flottant, linéairement la distance de l'élévation supplémentaire ayant lie à cause du lait affluant après le moment de commutation et par conséquent ledit commutateur registre également ladite quantité de lait supplémentaire.

5. Appareil selon l'un ou plusieurs des revendications précédentes, caractérisé en ce que le réservoir (1) de mesure est prévu d'une pièce en forme de T à l'ouverture d'affluage du lait, de sorte que le lait est admis tangentialement simultanément en deux directions opposées.

5